# EUROPÄISCHE PATENTANMELDUNG

(11) **EP 2 716 153 A1**
(43) Veröffentlichungstag der Anmeldung: **09.04.2014**
(21) Anmeldenummer: 12186917.6
(22) Anmeldetag: 02.10.2012
(51) Int. Cl.: A01K 1/015, C08J 9/16, C08J 9/18, C08J 9/232, C08J 9/236

(54) **Stallbodenbelag aus expandiertem thermoplastischem Polyurethan-Partikelschaumstoff**

(71) Anmelder: BASF SE, 67056 Ludwigshafen (DE)
(72) Erfinder: Die Erfindernennung liegt noch nicht vor

(57) **Zusammenfassung**

Die Erfindung betrifft einen Stallbodenbelag, enthaltend eine Schaumstoffmatte umfassend expandierten thermoplastischen Polyurethan-Partikelschaumstoff, Verfahren zu dessen Herstellung sowie die Verwendung von expandiertem thermoplastischem Polyurethan-Partikelschaumstoff zur Herstellung des Stallbodenbelags.

## Beschreibung

Die Erfindung betrifft einen Stallbodenbelag, enthaltend eine Schaumstoffmatte umfassend expandierten thermoplastischen Polyurethan-Partikelschaumstoff, Verfahren zu dessen Herstellung sowie die Verwendung von expandiertem thermoplastischen Polyurethan-Partikelschaumstoff zur Herstellung des Stallbodenbelags (im Rahmen dieser Anmeldung werden thermoplastische Polyurethane auch als "TPU" und expandierte thermoplastische Polyurethane auch als "E-TPU" bezeichnet).

Der Begriff "Stallbodenbelag" im Sinne der vorliegenden Erfindung umfaßt nicht nur Bodenbeläge im Bereich der Stallungen, also der eigentlichen Daueraufenthaltsbehausungen für Tiere, sondern auch Beläge für sämtliche Böden, auf denen sich Tiere kurz- oder langfristig aufhalten, beispielsweise auch Bodenbeläge im Bereich von Liegeboxen, Boxengassen, Laufgängen oder Führanlagen für Tiere.

Die Anforderungen an Stallbodenbeläge können je nach Tierart und Einsatzgebiet recht unterschiedlich sein. So unterscheiden sich die Anforderungen bei einer Nutztierhaltung (z.B. von Milchkühen oder Schweinen) beispielsweise von denen der Pferde- oder Hundehaltung. Auch die Anforderungen an Bodenbeläge für die Stallungen, die Liegebox, die Boxengasse, die Führanlagen, der Außenflächen etc. sind jeweils unterschiedlich. Dennoch gibt es für bestimmte Eigenschaften Anforderungen, die für alle Stallbodenbeläge und für alle Tierarten relevant sind. Die Stallbodenbeläge beispielsweise für Milchkühe (sogenannte Kuhmatratzen) haben zum Ziel das Wohlbefinden der Kühe zu verbessern und damit die Milchleistung zu erhöhen. Daher werden neben guten thermischen Isoliereigenschaften eine hohe Rutschfestigkeit, hohe mechanische Beanspruchbarkeit, aber auch geringe Druckfestigkeit (hohe Weichheit) bei gleichbleibender hoher Gummielastizität unter Dauerbelastung (geringer Druckverformungsrest) gefordert. Die Kuhmatratze sollte aus hygienischen Gründen möglichst wenig Feuchtigkeit aufnehmen. Außerdem sollte die Kuhmatratze eine chemische Beständigkeit gegenüber Urin, Kot und Milchsäure aufweisen.
Weiterhin sollten Kuhmatratzen formstabil und leichtgewichtig beschaffen sein, so dass der technische Aufwand für ihre Verlegung möglichst gering ist. Zudem ist der wirtschaftliche Aspekt nicht zu vernachlässigen.

Zur Herstellung von Stallbodenbelägen die solchen Anforderungen möglichst nahe kommen, sind daher verschiedene Kunststoffmaterialien und Ausführungen bekannt.
So weisen beispielsweise Stallbodenbeläge aus massiven Gummimatten oder aus Gummigranulat, das mit Bindemittel zu Matten verarbeitet wurde, hohe mechanische Festigkeiten und geringe Feuchtigkeitsaufnahmen auf, sind jedoch bezüglich der thermischen Isolationswerte und der Verformbarkeit (Weichheit) verbesserungswürdig.
Stallbodenbeläge aus Schaumstoffen, beispielsweise Polyurethan-Flockenverbundschaumstoffen oder Latexschaumstoffen weisen demgegenüber eine wesentlich verbesserte thermische Isolierung und Verformbarkeit (Weichheit) auf, sind aber in der Regel aufgrund ihrer offenzelligen Schaumstoffstruktur bezüglich ihrer mechanischen Festigkeit und Feuchtigkeitsaufnahme nachteilig. Diesen Nachteilen kann in gewissem Maße abgeholfen werden, indem die Schaumstoffmatten mit einer Folie verpackt werden und mit einer flüssigkeitsundurchlässigen und mechanisch stabilen Deckschicht versehen werden (Sandwichaufbau). Allerdings sind dazu komplexere Herstellverfahren nötig, die die entsprechenden Stallbodenbeläge verteuern. Die Folien können zudem während des Gebrauchs oder während der Reinigung, z.B. mit einem Hochdruckreiniger, beschädigt werden.
Das Eigenschaftsprofil von Stallbodenbelägen kann auch durch einen Mehrschichtaufbau der Matte (mit oder ohne Deckschicht) verbessert werden, z.B. durch Kombination Polyurethanschaumstoff und Vollgummi. Dies ist jedoch ebenfalls mit den eben beschriebenen Nachteilen verbunden.
Bodenbeläge aus Polyethylenschaumstoffen, wie sie beispielsweise in der DE 43 42 200 A als Turnmatten beschrieben werden, haben zwar eine gute Verformbarkeit und praktisch keine Feuchtigkeitsaufnahme, aber eine hohe bleibende Verformung nach Dauertrittbelastung, und sind daher als Stallbodenbeläge weniger gut geeignet.

Aufgabe der vorliegenden Erfindung war es daher, einen leichten und einfach zu verlegenden Stallbodenbelag bereitzustellen, der eine verbesserte Kombination aus hoher Weichheit (entsprechend einer hohen Eindringtiefe), geringer bleibender Verformung bei Dauerbelastung, geringem Verschleiß bei Dauerbelastung und geringer Feuchtigkeitsaufnahmen aufweist. Der Stallbodenbelag soll außerdem durch einfache Herstellverfahren, und somit kostengünstig, erhältlich sein.

Demgemäß wurde ein Stallbodenbelag, enthaltend eine Schaumstoffmatte umfassend expandierten thermoplastischen Polyurethan-Partikelschaumstoff, gefunden.

Der erfindungsgemäße Stallbodenbelag ist einfach und kostengünstig herstellbar, leicht und einfach zu verlegen und weist gegenüber bekannten Stallbodenbelägen eine verbesserte Kombination aus hoher Weichheit (entsprechend einer hohen Eindringtiefe), geringer bleibender Verformung bei Dauerbelastung, geringem Verschleiß bei Dauerbelastung und geringer Feuchtigkeitsaufnahme auf. Die Schaumstoffmorphologie des erfindungsgemäßen Stallbodenbelags führt zu einer geringen Formteildichte und hoher thermischer Isolation. Der erfindungsgemäße Stallbodenbelag ist darüber hinaus gegen Tierausscheidungen dauerbeständig.

Die erfindungsgemäßen Stallbodenbeläge, die Verfahren zu ihrer Herstellung und die Verwendung von expandierten thermoplastischen Polyurethan-Partikelschaumstoff zur Herstellung dieser Stallbodenbeläge werden im Folgenden näher beschrieben.

Zur Herstellung der erfindungsgemäßen Stallbodenbeläge enthaltend eine Schaumstoffmatte aus E-TPU-Partikelschaum sind grundsätzlich alle in der Literatur beschriebenen und dem Fachmann bekannten TPU geeignet.

Geeignete TPU und aufgeschäumte E-TPU-Partikel auf Basis von TPU sowie deren Herstellung sind beispielsweise offenbart in WO 94/20568 und WO 07/82838.

Bevorzugt einsetzbare TPU weisen eine Shore A-Härte im Bereich von 50 bis 120, bevorzugt 60 bis 100, besonders bevorzugt 65 bis 80 auf, gemessen gemäß DIN ISO 7619-1 DE an Prüfkörpern aus nicht-expandiertem thermoplastischem Polyurethan mit einer Dicke von 6 mm.

Bevorzugt einsetzbare TPU sind insbesondere solche, bei denen der Schmelzbereich bei einer DSC-Messung mit einer Aufheizrate von 20K/min unterhalb von 130°C, besonders bevorzugt unterhalb von 120°C beginnt, und bei denen das thermoplastische Polyurethan bei 190°C und einem Auflagegewicht von 21,6 kg nach DIN EN ISO 1133 höchstens eine Schmelzflussrate (MFR) von 250 g/10 min, besonders bevorzugt eine Schmelzflussrate von kleiner 200 g/10 min, aufweist.

Thermoplastische Polyurethane und Verfahren zu deren Herstellung sind allgemein bekannt und in der Literatur, beispielsweise den o.g. Schriften, beschrieben.

Aus den TPU lassen sich expandierte, d.h geschäumte, TPU-Partikel herstellen, insbesondere durch die in der Literatur beschriebenen und dem Fachmann bekannten Suspensions- bzw. Extrusionsverfahren. Die geschäumten E-TPU-Partikel können bei diesen Verfahren direkt oder indirekt, d.h. über treibmittelhaltige ungeschäumte expandierbare TPU-Partikel als Zwischenprodukt, erhalten werden.

Beim Suspensionsverfahren wird das TPU als Granulat mit Wasser, einem Suspensionshilfsmittel und einem Treibmittel in einem geschlossenen Reaktor bis über die Erweichungstemperatur des Granulats erhitzt. Dabei werden die Polymerpartikel mit dem Treibmittel imprägniert. Anschließend kann man entweder die heiße Suspension abkühlen, wobei sich die Partikel unter Einschluss des Treibmittels verfestigen und den Reaktor entspannen. Die auf diese Weise erhaltenen treibmittelhaltigen expandierbaren Partikel werden in einem nachfolgenden Schritt durch Erwärmen zu den expandierten Partikeln verschäumt. Alternativ kann man die heiße Suspension ohne Abkühlen schlagartig entspannen (Explosionsexpansionsverfahren), wobei die erweichten, treibmittelhaltigen Partikel unmittelbar zu den expandierten Partikeln aufschäumen, siehe z.B. WO 94/20568.

Beim Extrusionsverfahren wird das TPU in einem Extruder unter Aufschmelzen mit -einem Treibmittel vermischt, das dem Extruder zugeführt wird. Die treibmittelhaltige Mischung wird entweder unter solchen Druck- und Temperaturbedingungen ausgepresst und granuliert, dass das TPU-Granulat nicht schäumt (expandiert), wozu beispielsweise eine Unterwassergranulierung verwendet wird, die bei einem Wasserdruck von mehr als 2 bar betrieben wird. Man erhält treibmittelhaltige, expandierbare Partikel, die in einem anschließenden Schritt durch Erwärmen zu den expandierten Partikeln verschäumt werden. Alternativ kann man die Mischung auch ohne Überdruck auspressen und granulieren. Dabei schäumt der Schmelzestrang auf und man erhält durch Granulierung die expandierten Partikel.

Die zur Herstellung der erfindungsgemäßen Stallbodenbeläge enthaltend eine Schaumstoffmatte geeigneten expandierten TPU-Schaumstoffpartikel haben bevorzugt Schüttdichten im Bereich von 10 kg/m³ bis 600 kg/m³, bevorzugt 25 kg/m³ bis 300 kg/m³, besonders bevorzugt von 50 bis 150 kg/m³.

Die expandierten TPU-Partikel sind in der Regel zumindest annähernd kugelförmig und weisen üblicherweise einen Durchmesser von 0,2 bis 50 mm, bevorzugt 0,5 bis 20 mm und insbesondere 1 bis 15 mm auf. Bei nicht kugelförmigen, z.B. länglichen oder zylinderförmigen Partikeln, ist mit Durchmesser die längste Abmessung gemeint.

Aus den expandierten TPU-Partikeln kann man nach dem Fachmann grundsätzlich bekannten Verfahren Schaumstoffmatten herstellen. Beispielsweise können die TPU-Partikel in kontinuierlichen oder diskontinuierlichen Verfahren miteinander verklebt werden, beispielsweise mit dem Fachmann bekannten Polyurethan-Klebern, oder unter Wärmeeinwirkung miteinander verschweißt werden.

Aus den expandierten TPU-Partikeln kann man nach einem bevorzugten Verfahren Schaumstoffmatten herstellen, indem man die E-TPU-Partikel in einer geschlossenen Form, insbesondere einem Formteilautomaten, unter Wärmeeinwirkung miteinander verschweißt, wie beispielsweise beschrieben in DE-A 25 42 452. Dazu füllt man die Partikel in eine Form und leitet nach Schließen der Form Wasserdampf oder Heißluft ein, wodurch die Partikel weiter expandieren und bei Temperaturen von bevorzugt zwischen 100°C und 140°C miteinander zur Schaumstoffmatte verschweißen. Die aus den E-TPU-Partikeln hergestellten Schaumstoffmatten haben vorzugsweise eine Dichte im Bereich von 35 bis 300 kg/m³, insbesondere von 90 bis 250 kg/m³, und sind zur Verwendung als Stallbodenbelag geeignet. Die Dichte der Schaumstoffmatte lässt sich beispielsweise durch Wahl der Schüttdichte der E-TPU-Partikel und dem Verdichtungsverhältnis im Formteilautomat bzw. in einer Presse einstellen. In der Regel liegt das Verdichtungsverhältnis (Formteildichte/Schüttdichte) im Bereich von 1,5 bis 3.

Die Dicke der zur Herstellung von Stallbodenbelägen geeigneten Schaumstoffmatten umfassend E-TPU hängt von deren Verwendung ab und liegt in der Regel im Bereich von 20 bis 150 mm, für Kuhmatratzen bevorzugt im Bereich von 40 bis 120 mm.

Eine erfindungsgemäß bevorzugte Schaumstoffmatte, insbesondere zur Verwendung als Kuhmatratze, umfassend E-TPU-Partikelschaumstoff weist nach den Prüfungsbedingungen der Deutschen Landwirtschafts-Gesellschaft e.V. (DLG) bezüglich der Weichheit (d.h. im Kugeleindruckversuch im Neuzustand mit einer Kalotte mit einem Radius r = 120 mm und einer Eindringkraft von 2000 N) eine Eindringtiefe von 20 mm oder mehr auf.

Bezüglich der Dauertrittbelastung (d.h. nach Dauertrittbelastung auf einem Prüfstand mit einem runden Stahlfuß mit einem Durchmesser von 105 mm und einer Aufstandsfläche von 75 cm², mit 5 mm breitem Ring an der Peripherie der Sohle, der die übrige Fläche 1 mm überragt, mit 100000 Wechselbelastungen bei 10000 N) weist eine bevorzugte Schaumstoffmatte, insbesondere zur Verwendung als Kuhmatratze, keinen signifikanten Verschleiß und eine bleibende Verformung von maximal 50%, bevorzugt von maximal 30%, besonders bevorzugt von maximal 10%, bezogen auf die Dicke der Schaumstoffmatte im Neuzustand, auf.

Die wie beschrieben herstellbaren Schaumstoffmatten umfassend E-TPU-Partikelschaumstoff sind zur Herstellung von Stallbodenbelägen, insbesondere Kuhmatratzen, geeignet.
Die E-TPU-Schaumstoffmatten sind leicht und mechanisch einfach durch Sägen, Fräsen oder Stanzen bearbeitbar. Die Verlegung und/oder Verbindung einzelner Matten untereinander kann daher relativ einfach durch die verschiedensten Techniken erfolgen z.B. durch Nut- und Feder- oder Schwalbenschwanz-Verbindungen.
Zur weiteren Erhöhung der Abrieb- und Rutschfestigkeit kann die Schaumstoffmatte auf einer oder beiden Seiten mit einer Deckschicht, insbesondere aus Polyethylen, Polypropylen, Polyvinylchlorid oder Polyester mit einer Dicke im Bereich von 0,5 bis 5 mm versehen werden.
Die E-TPU Schaumstoffpartikel sind überwiegend, bevorzugt zu mehr als 95%, geschlossenzellig. Durch geeignete Verarbeitung können daher Schaumstoffmatten mit geringem Zwickelanteil und einer wasserundurchlässigen Schaumschicht hergestellt werden. Für Stallbodenbeläge umfassend E-TPU-Schaumstoffmatten, für die eine Flüssigkeitsdurchlässigkeit erwünscht ist, können die Schaumstoffmatten (mit oder ohne Deckschicht) einfach mit entsprechenden Ablaufkanälen durch Bohren oder Stanzen versehen werden.

Der erfindungsgemäße Stallbodenbelag ist somit einfach und kostengünstig herstellbar, leicht und einfach zu verlegen und weist gegenüber bekannten Stallbodenbelägen eine verbesserte Kombination aus hoher Weichheit (entsprechend einer hohen Eindringtiefe), geringer bleibender Verformung bei Dauerbelastung, geringem Verschleiß bei Dauerbelastung und geringer Feuchtigkeitsaufnahme auf.

## Patentansprüche

1. Stallbodenbelag, enthaltend eine Schaumstoffmatte umfassend expandierten thermoplastischen Polyurethan-Partikelschaum.

2. Stallbodenbelag nach Anspruch 1, **dadurch gekennzeichnet, daß** das thermoplastische Polyurethan eine Shore A-Härte im Bereich von 50 bis 120 aufweist, gemessen gemäß DIN ISO 7619-1 DE an Prüfkörpern aus nicht-expandiertem thermoplastischem Polyurethan mit einer Dicke von 6 mm.

3. Stallbodenbelag nach Ansprüchen 1 bis 2, **dadurch gekennzeichnet, daß** die Schaumstoffmatte eine Dichte im Bereich von 35 bis 300 kg/m³ aufweist.

4. Stallbodenbelag nach Ansprüchen 1 bis 3, **dadurch gekennzeichnet, daß** die Dicke der Schaumstoffmatte im Bereich von 20 bis 150 mm liegt.

5. Stallbodenbelag nach Ansprüchen 1 bis 4, **dadurch gekennzeichnet, daß** die Schaumstoffmatte mit einer Deckschicht aus Polyethylen, Polypropylen, Polyvinylchlorid oder Polyester mit einer Dicke im Bereich von 0,5 bis 5 mm versehen ist.

6. Verfahren zur Herstellung eines Stallbodenbelags gemäß Ansprüchen 1 bis 5, **dadurch gekennzeichnet, daß** Schaumstoffpartikel aus expandiertem thermoplastischem Polyurethan mit einer Schüttdichte im Bereich von 10 bis 600 kg/m³ mit Heißluft oder Dampf unter Bildung einer Schaumstoffmatte verschweißt werden.

7. Verwendung von expandiertem thermoplastischen Polyurethan-Partikelschaumstoff zur Herstellung eines Stallbodenbelags.
